# EUROPEAN PATENT APPLICATION

(11) **EP 3 597 725 A1**
(43) Date of publication of application: **22.01.2020**
(21) Application number: 19181293.2
(22) Date of filing: 19.06.2019
(51) Int. Cl.: C10G 3/00, C10G 1/06, D06L 4/00, C10G 11/18, C10G 47/00

(54) **A PROCESS FOR PRODUCING HYDROCARBONS**

(30) Priority: 16.07.2018 FI 20185645
(71) Applicant: UPM-Kymmene Corporation, 00100 Helsinki (FI)
(72) Inventor: Lindberg, Teemu, 02330 Espoo (FI); Eilos, Isto, deceased (FI); Björklöf, Thomas, 00250 Helsinki (FI)
(74) Representative: Boco IP Oy Ab

(57) **Abstract**

The present invention relates to a process for producing hydrocarbons, said process comprising the steps, where feedstock of biological origin is degummed, the degummed feedstock is subjected to bleaching and/or hydrolysis, followed by hydroprocessing and catalytic cracking.

## Description

### FIELD OF THE INVENTION

The present invention relates to a process for producing hydrocarbons, where feedstock of biological origin is co-processed with non-renewable feedstock in a catalytic cracking process, for providing valuable components for liquid fuels and intermediates and starting materials for chemical processing. The present invention also relates to a process for producing hydrocarbons, where feedstock of biological origin is pretreated prior to introducing it as co-feed with the non-renewable feedstock into a catalytic cracking process. Further, the present invention relates to a process for reducing carbon dioxide emissions in processing feedstock comprising non-renewable feedstock, for producing hydrocarbons.

### BACKGROUND OF THE INVENTION

There is an increasing interest in co-processing renewable feedstock with non-renewable feedstock, such as crude oil based raw materials, in existing oil refineries and with existing equipment. Generally, oil refineries are designed to process high sulphur containing crude oil-based feedstocks, which contain very low amounts, if any, of oxygen containing compounds. Renewable materials contain significant amounts of phosphorus, silicon and alkali metals and particularly oxygen containing compounds, such as fatty acids and esters of fatty acids. Hydroprocessing of such renewable materials yields water, CO₂ and CO. Equipment in oils refineries is not designed to handle such materials.

Despite the ongoing research and development in the processing of renewable feedstocks and manufacture of fuels and chemicals, there is still a need to provide an improved process for producing hydrocarbons, where feedstock of biological origin is utilized as co-feed with non-renewable feedstock in catalytic cracking processes, particularly for providing valuable components for liquid fuels and intermediates for chemical processing, for example for high quality gasoline.

### SUMMARY OF THE INVENTION

An object of the invention is to provide a process for producing hydrocarbons, where feedstock of biological origin is co-processed with non-renewable feedstock in a catalytic cracking process.

Another object of the invention is to provide a process for producing hydrocarbons, where feedstock of biological origin is co-processed with non-renewable feedstock in a catalytic cracking process, for providing valuable components for liquid fuels and intermediates and starting materials for chemical processing.

Still another object of the invention is to provide a process for reducing carbon dioxide emissions in producing hydrocarbons, where feedstock of biological origin is co-processed with non-renewable feedstock in a catalytic cracking process.

One aspect is a process for producing hydrocarbons, where said process comprises the steps, where feedstock of biological origin is degummed to produce degummed feedstock;
the degummed feedstock is subjected to bleaching and/or hydrolysis to produce pretreated feedstock;
the pretreated feedstock is hydroprocessed to produce hydroprocessed feedstock;
the hydroprocessed feedstock is fractionated to produce at least one fraction comprising hydrocarbons having carbon number of at least C20; and
the fraction comprising hydrocarbons having carbon number of at least C20 and at least one non-renewable feedstock are subjected to catalytic cracking to produce a product comprising hydrocarbons boiling in the range of 40 - 210°C.

The product may be subjected to fractionation to separate fractions comprising hydrocarbons boiling in the range of 40 - 210°C.

Another aspect of the invention is a process for reducing carbon dioxide emissions in producing hydrocarbons, where said process comprises the steps, where
the feedstock of biological origin is degummed to produce degummed feedstock;
the degummed feedstock is subjected to bleaching and/or hydrolysis to produce pretreated feedstock;
the pretreated feedstock is hydroprocessed catalytically to produce hydroprocessed feedstock;
the hydroprocessed feedstock is fractionated to produce at least one fraction comprising hydrocarbons having carbon number of at least C20; and
the fraction comprising hydrocarbons having carbon number of at least C20 and at least one non-renewable feedstock are subjected to catalytic cracking to produce a product comprising hydrocarbons boiling in the range of 40 - 210°C.

Characteristic features of the invention are presented in the appended claims.

### DEFINITIONS

"Fatty acids" refer here to C4 - C26 fatty acids, typically present in feedstocks of biological origin, or originating from renewable sources. Said fatty acids may be in the free form, where the fatty acids that are not present as esters (acylglycerols) or other bound derivatives of fatty acids, or alternatively, they may be present as esters (acylglycerols) or other bound derivatives of fatty acids.

The term "acylglycerol" refer here to esters formed from glycerol and fatty acids, linked by acylglyceride linkage between the fatty acid and at least one of the hydroxyl groups of glycerol.

The term "unsaponifiables" refers here to substances which cannot be saponified by caustic treatment, such as higher aliphatic alcohols, sterols, and hydrocarbons, particularly fatty alcohols (C20-C24), sterols (C30) and carotenes, and various other alkyl- and cyclo-alkyl hydrocarbon derivatives (C10-C30).

The term "non-renewable feedstock" refers here to fossil feedstocks, originating typically from mineral oil, shale oil or coal, comprising hydrocarbons, suitably vacuum gas oil or atmospheric gas oil.

The term "fractionation" refers here to separation methods for the separation of two or more components from each other. The separation method is based on the concept of utilising the differences in the vapour pressure of the components. Fractionation includes here flashing, evaporation and distillation methods and their combinations.

The term "hydroprocessing" refers here to catalytic processing of feedstock by all means of molecular hydrogen.

Hydroprocessing includes hydrogenation, which means here saturation of carbon-carbon double bonds by means of molecular hydrogen under the influence of a catalyst, hydrocracking (HC), which refers to catalytic decomposition of organic hydrocarbon materials using molecular hydrogen at high pressures, hydrodewaxing (HDW), which refers to catalytic treatment of organic hydrocarbon materials using molecular hydrogen at high pressures to reduce the wax and/or the content of high carbon number hydrocarbons by isomerization and/or cracking. Said hydroprocessing also includes hydroisomerization (HI), ring opening and saturation of aromatic compounds. Said hydroprocessing further includes hydrodearomatization (HDA), which refers to catalytic treatment of organic hydrocarbon materials using molecular hydrogen at high pressures for converting aromatic compound to non-aromatic compounds. Said hydroprocessing also includes hydrotreatment. One or more of the above cited reactions may take place in hydroprocessing.

The term "hydrotreatment" refers here to a catalytic process, which removes oxygen from organic oxygen compounds as water (hydrodeoxygenation, HDO), sulfur from organic sulfur compounds as dihydrogen sulfide (hydrodesulfurisation, HDS), nitrogen from organic nitrogen compounds as ammonia (hydrodenitrogenation, HDN), halogens, for example chlorine from organic chloride compounds as hydrochloric acid (hydrodechlorination, HDCI), by the means of molecular hydrogen.

The term "deoxygenation" includes here "hydrodeoxygenation", which refers here to the removal of oxygen from organic molecules, such as carboxylic acid derivatives, alcohols, ketones, aldehydes or ethers, with the influence of molecular hydrogen. Catalytic deoxygenation can proceed by decarboxylation (removal of carboxyl oxygen as CO₂) and/or decarbonylation (removal of carboxyl oxygen as CO), in liquid or in gas phase.

The term "catalytic cracking" refers here to a process for converting high-boiling, high-molecular weight hydrocarbons to low-boiling, low molecular weight hydrocarbons. The cracking is performed in the presence of a catalyst at increased temperature and pressure.

The term "fluid catalytic cracking" (FCC) refers to a process, which breaks large hydrocarbon molecules into smaller molecules by contacting them with powdered catalyst at a high temperature and moderate pressure which first vaporizes the hydrocarbons and then breaks them. The cracking reactions occur in the vapor phase and start immediately when the feedstock is vaporized in the catalyst riser. FCC is widely used to convert the high-boiling, high-molecular weight hydrocarbon fractions of petroleum crude oils into more valuable gasoline, olefinic gases, and other products. It also produces byproduct gases that have more carbon-carbon double bonds (i.e. more olefins), and hence more economic value.

The term "hydrocracking" refers here to a process for converting high-boiling, high-molecular weight hydrocarbons to low-boiling, low molecular weight hydrocarbons. The cracking is performed in the presence of a catalyst and with the aid of molecular hydrogen at increased temperature and pressure.

Transportation fuels refer to fractions or cuts or blends of hydrocarbons having distillation curves standardized for fuels, such as for diesel fuel (middle distillate from 160 to 380°C, according to EN 590), gasoline (40 - 210°C, according to EN 228), aviation fuel (160 to 300°C, according to ASTM D-1655 jet fuel), kerosene, naphtha, etc.

Liquid fuels are hydrocarbons having distillation curves standardized for fuels.

The term "biofuel" refers here to liquid fuels obtained from renewable feedstock, e.g. feedstock of biological origin.

### BRIEF DESCRIPTION OF THE DRAWINGS

Figure 1 is a schematic flow diagram representing one embodiment of the process.
Figure 2 is a schematic flow diagram representing another embodiment of the process.

### DETAILED DESCRIPTION OF THE INVENTION

Typically, in catalytic cracking processes, such as fluid catalytic cracking or hydrocracking, feedstocks comprising materials originating from crude oil, shale oil etc., often vacuum gas oil, containing high amounts of sulfur, are used. Said feedstocks contain negligible amounts, if any, of compounds containing oxygen. CO₂ and CO are formed in the processing of compounds containing oxygen, such as materials of biological origin, and they cause corrosion problems particularly in gas handling devices. For example, in oil refineries, said devices are not designed for handling such materials. This has limited the intertest in oil refineries to utilize feedstock of biological origin.

The formed CO₂ decreases H₂S purification efficiency of gas treating devices, such as amine scrubbers, whereby several purification steps would be needed, and it also decreases sulfur recovery efficiency.

Further, feedstocks of biological origin usually contain impurities comprising phosphorus, silicon and metals, particularly alkali metals. Said impurities block and poison catalysts. For example, silicon blocks catalyst pores, phosphorus causes polymerization and alkali metals decrease catalyst activity, and thus decrease catalyst service life time.

An improved, industrially effective and sustainable process is now designed, where these disadvantages can be avoided. It enables efficient use of feedstock of biological origin as co-feed in a catalytic cracking process with non-renewable feedstock, for producing hydrocarbons boiling in the range of 40 - 210°C. Said hydrocarbons are particularly suitable as gasoline fuel. Also, other fractions comprising valuable components, such as intermediates and starting materials for chemical processing may be obtained, like olefins, ethers, etc.

One aspect is a process for producing hydrocarbons, where said process comprises the steps, where feedstock of biological origin is
degummed to produce degummed feedstock;
the degummed feedstock is subjected to bleaching and/or hydrolysis to produce pretreated feedstock;
the pretreated feedstock is hydroprocessed catalytically to produce hydroprocessed feedstock;
the hydroprocessed feedstock is fractionated to produce at least one fraction comprising hydrocarbons having carbon number of at least C20; and
the fraction comprising hydrocarbons having carbon number of at least C20 and at least one non-renewable feedstock are subjected to catalytic cracking to produce a product comprising hydrocarbons boiling in the range of 40 - 210°C.

Another aspect of the invention is a process for reducing carbon dioxide emissions in producing hydrocarbons, where said process comprises the steps, where
the feedstock of biological origin is degummed to produce degummed feedstock;
the degummed feedstock is subjected to bleaching and/or hydrolysis to produce pretreated feedstock;
the pretreated feedstock is hydroprocessed catalytically to produce hydroprocessed feedstock;
the hydroprocessed feedstock is fractionated to produce at least one fraction comprising hydrocarbons having carbon number of at least C20; and
the fraction comprising hydrocarbons having carbon number of at least C20 and at least one non-renewable feedstock are subjected to catalytic cracking, to produce a product comprising hydrocarbons boiling in the range of 40 - 210°C.

In an embodiment, in the process, the catalytic cracking is carried out in an oil refinery.

In an embodiment, in the process, the catalytic cracking is fluid catalytic cracking.

In an embodiment, in the process, the catalytic cracking is hydrocracking.

The product obtained from the catalytic cracking comprises hydrocarbons boiling in the range of 40 - 210°C.

In a preferable embodiment, the product obtained from the catalytic cracking comprises saturated hydrocarbons boiling in the range of 40 - 210°C.

The product obtained from the catalytic cracking may be subjected to fractionation to separate fractions comprising hydrocarbons boiling in the range of 40 - 210°C.

In the process, the feedstock of biological origin is subjected to degumming and one or more further treatment steps before hydroprocessing the obtained pretreated feedstock to achieve necessary purification, removal of oxygen and excessive acidity, and to provide compatibility with non-renewable feedstocks, without losing the valuable compounds suitable as feedstock in the catalytic cracking.

In an embodiment, the degummed feedstock is subjected to treatment selected from bleaching, hydrolysis, and a combination of bleaching and hydrolysis, to produce pretreated feedstock.

In an embodiment, the degummed feedstock is subjected to bleaching and hydrolysis to produce pretreated feedstock.

In a preferable embodiment, the degummed feedstock is subjected to bleaching to produce pretreated feedstock.

In another preferable embodiment, the degummed feedstock is subjected to hydrolysis to produce pretreated feedstock.

The pretreated feedstock comprises C4-C26 fatty acids and/or esters of said fatty acids, such as acylglycerols.

The hydroprocessed feedstock refers here to the product obtained from hydroprocessing of the pretreated feedstock. The hydroprocessed feedstock may comprise at least one effluent obtained from the hydroprocessing, or a liquid hydrocarbon fraction separated from said effluent. At least one heavy hydrocarbon fraction comprising hydrocarbons having carbon number of at least C20, is obtained by fractionation of the hydroprocessed feedstock.

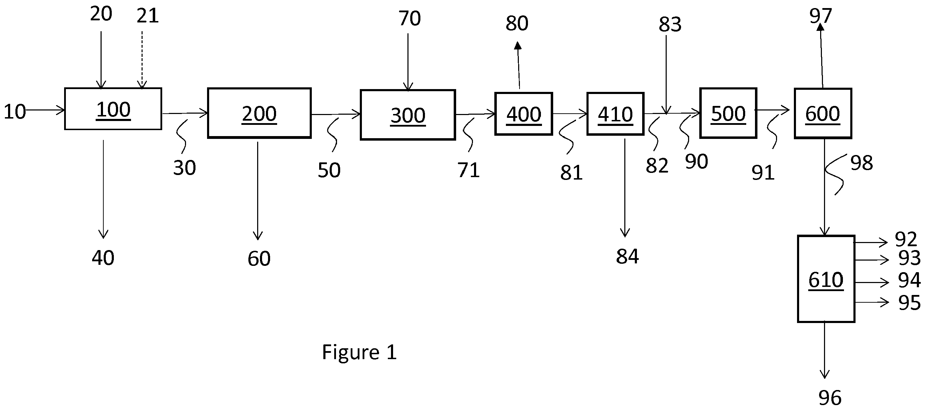

In Figure 1 feedstock of biological origin, for example feedstock comprising *Brassica carinata* oil (10) is degummed in a degumming step (100) with a degumming agent (20), optionally in the presence of steam (21), whereby degumming residue (40) and degummed feedstock (30) are obtained. The degummed feedstock (30) is directed to hydrolysis step (200), whereby said degummed feedstock (30) is hydrolyzed at hydrolysis conditions to obtain an aqueous stream comprising glycerol (60) and a stream comprising fatty acids (50). The stream comprising fatty acids (50) (i.e. pretreated feedstock) is separated from the aqueous stream (60) (not shown in the figure) and directed to the hydroprocessing step (300), where the pretreated feedstock (50) is hydroprocessed at hydroprocessing conditions with hydrogen (70) to obtain at least one effluent (71). The effluent (71) is directed to a separator (400) where gaseous components (80) and liquid stream (81) comprising hydroprocessed feedstock are separated. The liquid stream (81) is directed to fractionation (410), where at least a fraction comprising hydrocarbons having carbon number of at least C20 (82) and at least a fraction comprising C4-C20 fatty acids (84) are separated. Vacuum gas oil (83) originating from crude oil is combined with the fraction (82) comprising hydrocarbons having carbon number of at least C20 to obtain mixture (90) of hydroprocessed biological feedstock and non-renewable feedstock and the mixture (90) is directed to fluid catalytic cracking step (500) to obtain a product (91) from catalytic cracking. The product (91) from catalytic cracking is directed to a separator (600), where a gaseous fraction (97) is separated from a liquid fraction (98). The liquid fraction is directed to fractionation (610), where olefin fraction (92), gasoline fraction (93), gases (96), heavy gas oil fraction (94) and light gas oil fraction (95) are separated. Additionally, e cycle oil may be separated (not shown in the figure).

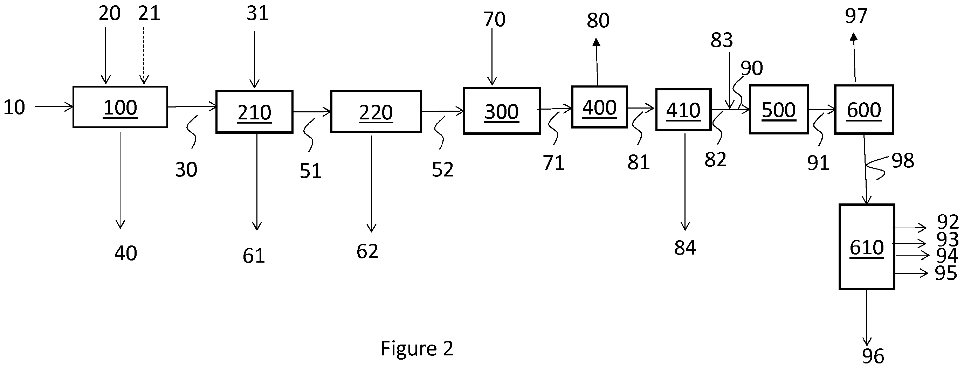

In Figure 2 feedstock of biological origin, for example *Brassica carinata* oil (10) is degummed in a degumming step (100) with a degumming agent (20), optionally in the presence of steam (21), whereby degumming residue (40) and degummed feedstock (30) are obtained. The degummed feedstock (30) is directed to bleaching (210) in the presence of a bleaching agent (31), whereby a bleaching residue (61) is separated and bleached feedstock (51) is obtained. The bleached feedstock (51) is directed to optional deacidification (220) obtain a stream comprising bleached and decidified feedstock (52) and optionally an aqueous stream (62) are obtained. The stream comprising bleached and deacidified feedstock (52) (i.e. pretreated feedstock) is directed to the hydroprocessing step (300), where the pretreated feedstock (52) is hydroprocessed at hydroprocessing conditions with hydrogen (70) to obtain at least one effluent (71). Effluent (71) is directed to a separator (400) where gaseous components (80) and liquid stream (81) comprising hydroprocessed feedstock are separated. The liquid stream (81) is directed to fractionation (410), where at least a fraction comprising hydrocarbons having carbon number of at least C20 (82) and at least a fraction comprising C4-C20 fatty acids (84) are separated. Vacuum gas oil (83) originating from crude oil is combined with the fraction (82) comprising hydrocarbons having carbon number of at least C20 (comprising hydroprocessed feedstock), to obtain a mixture (90) of hydroprocessed biological feedstock and non-renewable feedstock and the mixture (90) is directed to fluid catalytic cracking step (500) to obtain a product (91) from catalytic cracking. The product (91) from catalytic cracking is directed to a separator (600), where a gaseous fraction (97) is separated from a liquid fraction (98). The liquid fraction is directed to fractionation (610), where olefin fraction (92), gasoline fraction (93) gas (96), heavy gas oil fraction (94) and light gas oil fraction (95) are separated. Additionally, cycle oil may be separated (not shown in the figure).

The deacidification step is optional, and typically it is carried out for removing fatty acids by distillation, steam stripping etc., if it is desired, to reduce high acid number of the feedstock.

The aqueous steam (62) may comprise water from condensed stripping steam; this is only relevant when steam (as direct injection) is used.

The bleached and deacidified feedstock (52) comprises mainly triglycerides.

Accordingly, the feedstock of biological origin is subjected to degumming, followed by treatment comprising bleaching and/or hydrolysis, then followed by hydroprocessing whereby hydroprocessed feedstock (effluent from hydroprocessing) of biological origin is obtained. In the steps preceding the hydroprocessing, impurities, such as metals, phosphorus, alkali metals, earth alkaline metals are effectively removed, and, in the hydroprocessing step, oxygen is removed to yield liquid hydroprocessed feedstock of biological origin comprising hydrocarbons. Said feedstock or a fraction thereof comprising hydrocarbons having carbon number of at least C20 may readily be combined with crude oil based raw materials and co-processed in catalytic cracking.

### Feedstock

A great diversity of feedstocks of biological origin is available. The feedstock may comprise free fatty acids, acylglycerols, such as monoglycerides, diglycerides, triglycerides and any combinations thereof. The feedstock may also comprise esters of fatty acids with alcohols (non-glycerol esters). The feedstock typically contains varying amounts of impurities, such as gums (phospholipids etc.), metals, water, phosphorus, alkali metals, earth alkaline metals, lignin, etc. All feedstocks share the same characteristics in the sense that they contain varying amounts and types of impurities that make them difficult to purify.

In an embodiment, said fatty acids contain aliphatic carbon chains having from about 4 to about 26 carbon atoms, comprising aliphatic carbon chains that are saturated, or mono-, di- or polyunsaturated. In a preferable embodiment, said fatty acids contain aliphatic carbon chains having from about 8 to about 26 carbon atoms.

The feedstock may originate from any renewable source, such as agricultural, wood processing industry and aqua-cultural sources. It may originate from plants, animals, algae, fish and microbiological processes. Examples of such feedstocks are lipidic biomass feedstocks, low cost waste materials, side streams, by-products, crude and refined plant oils, crude tall oil/tall oil obtained from kraft pulping of wood, animal oils and fats including fish oils, algal lipids and the like, lipids obtained by microbiological processes, acid oils, refining waste and residues and sewage sludge, and any combinations thereof. The feedstock originating from renewable source or sources is meant to include here feedstock other than those obtained from crude oil (mineral oil) or shale oil or coal.

In an embodiment, the feedstock of biological origin is selected from non-edible waste and residue materials and plant originating oils and combinations thereof, which cannot be used as such or in processing in food or feed.

In a preferable embodiment plant derived oils, such as plant oils which include here also crude tall oil, are used as the feedstock of biological origin.

In a preferable embodiment, the feedstock of biological origin comprises at least one oil derived from biological origin comprising at least 85 wt% of C18-C26 fatty acids. In another preferable embodiment the feedstock of biological origin comprises at least one oil derived from biological origin comprising 85-99 wt% of C18-C26 fatty acids. Yet in another more preferable embodiment the feedstock of biological origin comprises at least one oil derived from biological origin comprising 86-97 wt% of C18-C26 fatty acids. Said fatty acids may be free fatty acids or bound in esters.

In another preferable embodiment the C18-C26 fatty acids comprise at least 30 wt% of C20-C26 fatty acids. In another preferable embodiment the C18-C26 fatty acids comprise 30- 60 wt% of C20-C26 fatty acids. Yet, in another more preferable embodiment the C18 - C26 fatty acids comprise 30 -55 wt% of C20 - C26 fatty acids. Said fatty acids may be free fatty acids or bound in esters.

Suitably the plant oil originates from non-edible plants, including plants which may at most be used only as spices.

In an embodiment the feedstock of biological origin comprises at least one plant oil originating from *Brassica* species.

Plant oils originating from *Brassica* species comprise high amounts of fatty acids and glycerides thereof, where said fatty acids have carbon number C20 or higher, such as C20-C26 carbon numbers.

The term *"Brassica* species" refers here to the plants of a genus *Brassica* and genus *Sinapis* in the mustard family (Brassicaceae). *Brassica* species include plant species such as *Brassica juncea* (brown mustard), *Brassica carinata* (Carinata, Ethiopian mustard), *Brassica nigra* (black mustard), *Crambe abyssinic,; Brassica rapa, especially Brassica rapa* subsp. *oleifera* (field mustard), *Brassica napus,* especially *Brassica napus* subsp. *oleifera* (oilseed rape), *Sinapis hirta* and *Sinapis alba* and subspecies, cultivars, varieties and hybrids thereof.

In an embodiment the feedstock of biological origin comprises at least one plant oil originating from *Brassica carinata.*

In another preferable embodiment, the feedstock of biological origin is selected from mixtures of plant oil(s) the mixture comprising at least one plant oil originating from Brassica species. In another preferable embodiment, the mixture comprises at least one oil derived from *Brassica carinata* species. Such a mixture comprises 10 wt-% - 100 wt-% of oil derived from *Brassica carinata,* preferably at least 20 wt-% of oil derived from *Brassica carinata* and more preferably at least 30 wt-% of oil derived from *Brassica carinata.* As realized from above, the feedstock of biological origin may consist only of *Brassica carinata* oil.

Crude tall oil that is obtained from kraft pulping of wood, especially coniferous wood, and defined here as a plant derived oil, may also be used as feedstock component. Crude tall oil is mainly composed of saturated and unsaturated oxygen-containing organic compounds, such as resin acids (mainly abietic acid and its isomers), fatty acids (mainly linoleic acid, oleic acid and linolenic acid), unsaponifiables, such as fatty alcohols, sterols and other alkyl hydrocarbon derivatives, as well as impurities. The composition of the CTO varies depending on the specific wood species. Crude tall oil comprises mostly C18 fatty acids, and not any significant amounts of triglycerides. Typically, CTO contains impurities such as inorganic sulfur compounds, alkaline metal compounds, residual metals such as Na, K, Ca, Fe, Si and phosphorus. In this context the term "crude tall oil" refers, in addition to crude tall oil, also to pretreated crude tall consisting of depitced tall oil and purified tall oil.

Typically, hydroprocessing of said plant derived oils is difficult in conventional processes. In the present process, the combination of selected pretreatment steps with hydroprocessing and catalytic cracking provides very efficient means for processing said oils into valuable products with good yields and quality. Co-processing of feedstock of biological origin with non-renewable feedstocks, such as mineraloil based feeds, provides clear advantages with respect to process efficiency, common and existing equipment can be use without significant investments in additional equipment, and also significant economic savings can be achieved. Particularly, the long hydrocarbon chains are cracked to provide the maximum amounts of desired hydrocarbons in the gasoline range, boiling in the range of 40 - 210°C, and the amounts of shorter hydrocarbons having less value in gasoline use, is low.

### Degumming step

Degumming removes phospholipids i.e. glycerides esterified at 1- and 2- positions by fatty acid residue and at 3-position by phosphoric acid residue, and/or phosphatides i.e. Ca, Mg, or Fe salts of phospholipids from the feedstock, whereby degummed feedstock is obtained, comprising esters of fatty acids (such as acylglycerols) and/or fatty acids.

Degumming may be carried out as treatment with at least one degumming agent. The degumming agent may be selected from water, salt solutions, enzymes, caustic soda, acids, such as phosphoric acid, citric acid or maleic acid, and combinations thereof, to remove phosphatides, pro-oxidants, salts and soaps, hydrophilic compounds and other water-soluble impurities. Optionally, steam is used in the degumming step. The degumming converts the phosphatides to hydrated gums, which are increasingly hydrophilic or insoluble in oil and readily separated as a degumming residue (degumming sludge) by settling, filtering or centrifugal action. After degumming, phosphorous levels below 30 ppm can be achieved. Optionally, neutralization may be carried out following degumming.

There are various industrial degumming processes available for different feedstock materials. Fats and oils to be degummed vary widely in gum content and gum properties, and finally, the means of gum disposal available, what equipment is needed and/or available, and the cost of auxiliaries also influence the choice of the appropriate degumming process. For example, The Lipid Handbook, edited by Frank D. Gunstone, John L. Harwood, Albert J. Dijkstra. 3rd ed., chapter 3.4, presents these issues in detail and various variants for degumming methods.

In the following, examples of commonly used degumming methods are described. Water degumming may also be used alone, or prior to other degumming methods as a combination. Various variations of degumming methods are available too.

In an embodiment, the degumming method is selected from water degumming, acid degumming, dry degumming, enzymatic degumming, EDTA degumming, deep degumming, membrane degumming and combinations thereof.

### Water degumming

Water degumming involves the addition of water, optionally steam, to the feedstock, and heating to about 60-70°C temperature for a short period of time. The proper amount of water is normally about 70 to 80 wt% of the phosphatides content of the feedstock. Hydrated gums are separated from degummed oil. Water-degummed oil still contains some phosphatides (typically between 80 and 200 ppm); only hydratable phosphatides are removed. Typically, the nonhydratable phosphatides, which are calcium and magnesium salts of phosphatic acid and phosphatidyl ethanolamine, remain in the feedstock after water degumming.

### Acid degumming

Acid degumming utilizes an acid, in the presence of water. Acid degumming is typically carried out at about 60-95°C temperature. The acid is suitably selected from the group consisting of phosphoric acid, which forms a precipitate with Ca and Mg, citric acid which forms a complex with Ca and Mg, and malic acid. Small amount of degumming acid dissociates the nonhydratable phosphatides (NHP) into phosphatidic acid (PA) and calcium or magnesium bi-phosphate salt. Several variations of acid degumming processes are available in the art to attain a phosphorus value even lower than 5 ppm.

The liberated phosphatides may be neutralized to make them hydratable by the addition of a base.

### Dry degumming

In dry degumming, the feedstock is treated with an acid (principle is that strong acids displace weaker acids from their salts) to decompose the metal ion/phosphatide complex whereby a mixture is formed, and the mixture is then mixed with bleaching earth (bleaching agent). The bleaching earth containing the degumming acid, phosphatides, pigments and other impurities is removed by filtration. Water or acid-degummed feedstocks may also be dry degummed to ensure a low phosphorus level.

### Enzymatic degumming

In enzymatic degumming, a degumming enzyme, such as Phospholipase A1, converts the phospholipids in the feedstock into water soluble lysophospholipids and free fatty acids. The feedstock may optionally water degummed prior to subjecting to enzymatic degumming.

### EDTA degumming

In the EDTA degumming, a chelating agent (such as EDTA) is used for chelating Ca, Mg and Fe ions. EDTA has much stronger affinity for Ca and Mg ions than PA and the NHP are decomposed by the action of EDTA.

### Deep degumming

Deep degumming utilizes a reagent like an acid to chelate Fe, Ca and Mg NHP complex.

### Membrane degumming

Membrane technology including nanofiltration and ultra-filtration may also be used for removing phospholipids from plant oils.

In a preferable embodiment, the degumming is carried out by acid degumming.

The degummed feedstock of biological origin is then subjected to further treatment comprising bleaching and/or hydrolysis to produce pretreated feedstock.

### Bleaching

In an embodiment, the degummed feedstock of biological origin is subjected to bleaching, which ensures the removal of soaps, residual phosphatides, trace metals, and some oxidation products, and it catalyzes the decomposition of carotenes. The degummed and bleached feedstock may be called here bleached feedstock. The bleaching agent also catalyzes the decomposition of peroxides whereby peroxides and secondary oxidation products are removed. These non-pigment materials, such as soaps, gums, and pro-oxidants metals hinder filtration, poison catalysts and darken the oils. The bleaching procedure, type of the bleaching agent and dosage, temperature, time, moisture and filtration may be adjusted depending on the feedstock. Bleaching may be carried out as contact bleaching, such as batch atmospheric, batch vacuum and continuous vacuum bleaching. Typically, bleaching is carried out under vacuum, at the temperature around 90°C. Several bleaching agents have been proposed, and adsorptive clays, synthetic amorphous silica and activated carbons are regarded as the particularly suitable ones. Acid activated fuller's earth (bentonite clay) is an efficient bleaching agent having high absorption capacity. It may be treated with an inorganic acid (sulfuric acid or hydrochloric acid or phosphoric acid) or organic acids such as oxalic acid, citric acid or acetic acid.

Bleaching may also comprise optional deacidification, which is carried out after the treatment with the bleaching agent. Deacidification may be performed for example by distillation or stripping, such as steam stripping to remove free fatty acids. A bleached feedstock is typically first degassed under 0.05 - 0.1 bar (a) at a temperature approx. 90°C. Thereafter, the obtained oil is heated to 250 - 280°C, under 0.05 - 0.1 bar (a) and directed to a stripping column, where it is stripped with 230 - 260°C steam. The fatty acid fraction is collected from the column overhead.

### Hydrolysis

Alternatively, the degummed feedstock of biological origin, or the bleached feedstock, is subjected to hydrolysis, also called fat splitting. Several hydrolysis methods are available for hydrolyzing esters of fatty acids to free fatty acids Typically, acylglycerols are hydrolyzed into fatty acids and glycerol, glycerol is removed in an aqueous phase and the fatty acids form the pretreated feedstock. The Twitchell process, medium pressure catalytic autoclave splitting, catalytic or non-catalytic low pressure splitting with superheated steam, continuous high-pressure countercurrent splitting and enzymatic fat splitting are examples of suitable hydrolysis methods, as presented below.

The traditional Twitchell process involves atmospheric boiling of fat in the presence of various reagents. In particular, sulfuric acid and a catalyst, such as sulfonic acid derivates are used to perform the reaction. The process consists of three or four successive reboilings with fresh water containing the reagent, whereby glycerol is removed with spent water. Steam is typically used for heating of the reaction mixture. Sulfuric and sulfonic acids are removed with water wash from the fatty acids obtained by the process.

The medium pressure (10 to 35 bars) autoclave splitting is carried out with a catalyst, such as ZnO or calcium or magnesium oxides. By using pressure, removal of glycerol is not required as it is in the Twitchell process. Usually, 2-4% of ZnO based on the weight of fat is used.

The catalytic or non-catalytic low pressure splitting method comprises using superheated steam. With a ZnO catalyst, the hydrolysis starts at 200-280°C. Use of superheated steam allows to decrease the pressure.

In the continuous, high pressure countercurrent splitting, known as the Colgate-Emery process, the reaction is typically carried out under conditions where water has significant (10-25 wt%) solubility in fats and oils. In practice, the reaction is performed under a pressure in the range from 30 to 55 bar and a temperature in the range of 230-270°C in a tubular reactor. The water amount is typically in the range of 40-60 wt% with respect to the amount of fat. ZnO can optionally be added as a catalyst to facilitate the reaction. The fats and oils are added at the bottom of a column and the water at the top of the column. Water and oils move in countercurrent manner through the column. The hydrolysis reaction of the fats and oils liberates glycerol and fatty acids. Glycerol is carried in the aqueous phase to the bottom of the column while the fatty acids are recovered at the top of column.

Another alternative is the enzymatic fat splitting. It can be performed at low temperatures and under atmospheric pressure in the presence of enzymes, such as lipases, to split the oil or fat, respectively, into glycerol and free fatty acids.

In a preferable embodiment, the hydrolysis is carried out with the continuous, high pressure countercurrent splitting method.

### Hydroprocessing step

In an embodiment, the pretreated biological feedstock, obtained from pretreatment comprising degumming and one or both of bleaching and hydrolysis, comprising C4-C26 fatty acids and/or esters of C4-C26 fatty acids, such as acylglycerols, is subjected to a catalytic hydroprocessing step. The obtained hydroprocessed feedstock or at least one effluent from the hydroprocessing may be fractionated in a fractionating step to provide at least a gaseous stream or fraction, a light hydrocarbon stream or fraction (C4 - C20) and a heavy hydrocarbon stream or fraction (at least C20).

Optionally, in addition to the pretreated feedstock, one or more of other biooils derived from biomass, e.g. by pyrolysis or by supercritical treatment, other plant derived biooils that have been treated separately, or mineral oil feedstocks originating from mineral oil or coal may be fed to the hydroprocessing step.

In an embodiment, in the hydroprocessing step, in addition to the pretreated feedstock, crude tall oil, which is optionally pretreated i.e. purified or depitched separately, is fed to the hydroprocessing where the pretreated feedstock and crude tall oil are, as a mixture hydroprocessed catalytically. The purification of crude tall oil may be selected from evaporation methods.

Said catalytic hydroprocessing step may be carried out in one step, or in more than one steps. The feedstock(s) may be heated, if necessary, before feeding to the hydroprocessing.

In an embodiment, the catalytic hydroprocessing is carried out with a catalyst effecting one or more of removing oxygen and other heteroatoms, effecting isomerisation, effecting dearomatization, effecting cracking, effecting hydroisomerization, effecting hydrocracking, or a combination of said catalysts.

The catalytic hydroprocessing comprises at least a hydrodeoxygenation step. Catalytic hydroprocessing may also comprise a hydrodeoxygenation step followed by one or more steps selected from isomerization, hydrodewaxing, hydrodearomatization and hydrocracking steps.

The hydrodeoxygenation (HDO) is performed by using one or more catalysts capable of removing oxygen and other heteroatoms, such as sulfur and nitrogen from organic compounds as well as catalysing hydrogenation of unsaturated bonds. The catalysts may comprise one or more metals selected from Group 6 and Groups 8, 9 and 10 (IUPAC 2016) metals. Particularly useful examples are Mo, W, Co, Ni, Pt and Pd. Also, mixtures of these, i.e. CoMo, NiMo and NiW are effective and may be used. The catalyst(s) may also contain one or more support materials, for example zeolite, alumina (Al₂O₃), gamma-alumina, zeolite-alumina, alumina-silica (SiO₂), ZrO₂, alumina-silica-zeolite and activated carbon. NiMo/Al₂O₃, NiMo/SiO₂, CoMo/Al₂O₃, CoMo/SiO₂ or NiW/zeolite-alumina, or Pt and/or Pd on gamma-alumina may be used as HDO catalysts. If a catalyst comprising NiMo, CoMo and/or NiW is used, the catalyst is in sulphided state.

In an embodiment, a solid catalyst comprising NiMo/Al₂O₃ or NiMo/SiO₂ is used as HDO catalyst.

In another embodiment, a solid catalyst comprising CoMo/Al₂O₃ or CoMo/SiO₂ is used.

Another effective hydrodeoxygenation catalyst is a multifunctional catalyst capable of catalysing the same reactions as HDO catalysts. In addition, multifunctional catalysts are capable of effecting isomerisation, dearomatization and cracking. Both isomerisation and cracking can improve cold flow properties. These catalysts can also be called hydrodewaxing (HDW) catalysts. Useful HDW catalysts are aluminosilicate molecular sieves, i.e. zeolites such as ZSM-5, ZSM-11, ZSM-12, ZSM 22, ZSM-23, ZSM 35, zeolite beta and zeolite Y. Also, NiW supported on alumina, zeolite-alumina or alumina-silica-zeolite may be used.

In one embodiment, NiW on a zeolite-alumina support is used as a multifunctional catalyst. NiW has excellent isomerising, cracking and dearomatization properties and it also has the capacity of performing the hydrodeoxygenation, hydrodesulfurization and other hydrogenation reactions of biological feed materials.

In another embodiment, NiW on alumina-silica-zeolite support is used as a multifunctional catalyst.

The temperature of the hydrodeoxygenation is 250-400°C, preferably 280-360°C and most preferably 280-350°C. The pressure (abs) of the hydrodeoxygenation is 20 - 160 bar, preferably 40 - 100 bar, particularly preferably 45-100 bar. The WHSV (weight hourly space velocity) varies between 0.1 and 10, preferably between 0.2 and 5.

The catalytic hydroprocessing may also comprise a hydrodewaxing step to induce selective hydroisomerization and hydrocracking of n-paraffins. A catalyst comprising a multifunctional catalyst, as described above, may be used as a hydrodewaxing (HDW) catalyst. Also, a molecular sieve, in combination with at least one metal of the Group 8, 9 or 10 may be used as hydrodewaxing catalyst. The molecular sieve may comprise zeolites (e.g. mordenite, ZSM-5, ZSM-12, ZSM-22, ZSM-23, SSZ-32, ZSM-35, ZSM-48, EU-2 and MCM-68) or silica-alumina phosphate materials (e.g. SAPO-11). ZSM-5 may optionally be used in its HZSM-5 form, in the absence of any metal of Groups 8, 9 or 10. Suitable metals of Groups 8, 9 or 10 are nickel, cobalt, platinum and palladium. Examples of possible combinations are Pt/ZSM-35, Ni/ZSM-5, Pt/ZSM-23, Pd/ZSM-23, Pt/ZSM-48, Pt/EU-2 and Pt/SAPO-11. The hydrodewaxing catalyst may also comprise a binder, such as silica, alumina, silica-alumina, zirconia, magnesia or a mixture of these. The catalyst may be a silica bound dealuminated (AHS treated) Pt/ZSM-12 catalyst. Also, NiW on zeolite-alumina support may be used as HDW catalyst.

The temperature of the hydrodewaxing step is 200 - 450°C, preferably 280 - 400°C, particularly preferably 290 - 400°C. The pressure is 20 - 160 bar, preferably 40 - 100 bar, particularly preferably 45 - 95 bar. The WHSV varies between 0.1 and 6, preferably between 0.3 and 5.

Catalytic hydroprocessing may also comprise an isomerisation step, where hydroisomerization (HI) catalysts may be used. The HI catalysts are capable of branching of the hydrocarbon chain, thus improving the cold flow properties of the product. Hydroisomerization catalysts are also capable of inducing at least some cracking reactions. Suitable catalysts contain at least one metal of Groups 8, 9 or 10 (e.g. Pt, Pd, Ni) and/or a molecular sieve. Preferred molecular sieves are zeolites (e.g. ZSM-22 and ZSM-23) and silicoaluminophosphates (e.g. SAPO-11 and SAPO-41). HI catalysts may also contain one or more of the support and/or binder materials described above. In one embodiment, the HI catalyst comprises Pt, a zeolite and/or silicoaluminophosphate molecular sieve, and alumina. The support may alternatively or additionally contain silica. Also, amorphous alumina and amorphous silica-alumina may be used as support materials. Typical hydroisomerization catalysts are, for example, Pt/SAPO-11/Al₂O₃, Pt/ZSM-22/Al₂O₃, Pt/ZSM-23/Al₂O₃, Pt/SAPO-11/SiO₂. Also, NiW on zeolite-alumina support may be used as HI catalyst.

The temperature of the hydroisomerization step is 200 - 450°C, preferably 280 - 400°C, particularly preferably 300 - 400°C. The pressure is 20 - 160 bar, preferably 40 - 100 bar, particularly preferably 45 - 95 bar. The WHSV varies between 0.1 and 6, preferably between 0.3 and 5.

The catalytic hydroprocessing may also comprise a hydrodearomatization step where hydrodearomatization (HDA) catalysts may be used. HDA catalysts are capable of breaking the aromatic ring structures of the aromatic hydrocarbons.

The HDA catalyst is selected from catalysts containing one or more metals of the Groups 8, 9 or 10 of the IUPAC Periodic table of Elements (2016), Group 6 and the rare earth metals. Suitably the metal is selected from Pt, Pd, Ir, Ru, Rh, Re, Ni, Co, Mo or W, in elemental, oxide or sulphide form, and mixtures and combinations thereof.

Suitably said catalyst comprises a support selected from oxide supports, such as alumina, titania, silica, magnesia, zirconia, and B₂O₃, and other supports, such as carbon, charcoal, zeolites, and combinations thereof, suitably Al₂O₃, Al₂O₃-SiO₂, zeolite Y, AI₂O₃- B₂O₃, SiO₂ or combination thereof. The catalyst may be promoted (or acid promoted) for increasing the acidity of the support whereby sulphur tolerance of the catalyst is improved. Examples of suitable sulfur tolerant catalysts are metal sulfides, Pd and/or Pt on zeolite Y/Al₂O₃, optionally with added Na; Pd and/or Pt on zirconia/silica, optionally with added alumina or alumina-silica; Pd and/or Pt on alumina/alumina-silica, optionally with one or more of titania, silica, magnesia, zirconia; Pd or Pt or Ir on carbon, or charcoal, suitably Pd promoted with tantalum perfluoride and hydrogen fluoride; Pd, Pt, Ir, Ru, Rh; Re on silca/alumina, sulphidized CoMo and NiMo catalysts on alumina/alumina-silica; and Pd-Pt on Al₂O₃ - B₂O₃. By using suitably modified supports, the HDA catalysts containing noble metals such as Pd, Pt, Ir, Ru, Rh and/or Re, can maintain their activity even in sulfur containing process conditions.

The temperature of the hydrodearomatization step is 85 - 450°C, suitably 200 - 450°C, preferably 280 - 400°C, particularly preferably 300 - 400°C. The pressure of the hydrodearomatization step is 20 - 160 bar, preferably 40 - 100 bar, particularly preferably 45 - 95 bar. The WHSV varies between 0.1 and 6, preferably between 0.3 and 5.

In an embodiment, hydroaromatization is carried out using a catalyst comprising elemental Ni on a support, at the temperature of 85 - 160°C and under a pressure of 20-40 bar.

As an example, NiW on a support selected from the group consisting of Al₂O₃, zeolite, zeolite-Al₂O₃, Al₂O₃-SiO₂ and activated carbon may be used as HDA catalyst. In an embodiment, NiW on alumina-silica-zeolite support is used as an HDA catalyst. In another embodiment, Pt on zeoliteY/ Al₂O₃ is used as an HDA catalyst.

The catalytic hydroprocessing may also comprise a hydrocracking step, where hydrocracking (HC) catalysts may be used. HC catalysts decrease the hydrocarbon chain length and convert high boiling point, high molecular weight hydrocarbons into lower boiling range, lower molecular weight compounds. HC catalysts are active in cracking of carbon-carbon bonds as well as hydrogenation of unsaturated molecules in the feedstock.

The HC catalysts are selected from catalysts containing one or more metals of the Groups 8, 9 or 10 and/or Group 6 metals, on a suitable support. Acidic supports, such as zeolites, may be used either alone or mixed with a carrier matrix. Suitable catalysts are Pd or Pt containing catalysts or sulfided catalysts comprising Mo or W in combination with Ni or Co. Suitable catalysts include NiMo supported on gamma alumina or on ZSM-5, Pt supported on Y zeolite or on ZSM-5 or NiW on zeolite-alumina. The HC catalyst may also comprise a suitable binder, for example inorganic oxide material, such as alumina. In an embodiment, NiW on zeolite-alumina is used as HC catalyst.

The temperature of the hydrocracking step is 200 - 480°C, preferably 250 - 450°C, particularly preferably 280 - 450°C. The pressure of the hydrocracking step is 20 - 160 bar, preferably 40 - 100 bar, particularly preferably 45 - 95 bar. The WHSV varies between 0.1 and 15, preferably between 0.3 and 5.

The different steps of the catalytic hydroprocessing may be arranged in several ways, according to the feedstock and taking into account the desired product to be produced.

The hydroprocessing step may be performed using a step a) as the first step, followed by one or both of the following steps b) and c), and optionally step d) and/or e), where steps a) - e) are denoted as:
(a) hydrodeoxygenation step,
(b) hydroisomerization step,
(c) hydrodewaxing step,
(d) hydrodearomatization step,
(e) hydrocracking step.

Suitable hydroprocessing step configurations are:
(a) and (b);
(a) and (c);
(a), (b) and (c);
(a), (b) and (d);
(a), (c) and (d); and
(a), (b), (c) and (d).

In one embodiment, the catalytic hydroprocessing comprises a hydrodeoxygenation step (a), followed by a hydroisomerization step (b), and/or hydrodewaxing step (c), and/or a hydrodearomatization step (d).

In another embodiment, the catalytic hydroprocessing comprises a hydrodeoxygenation step (a), followed by a hydroisomerization step (b), hydrodewaxing step (c) and a hydrodearomatization step (d).

Yet in another embodiment, the catalytic hydroprocessing comprises a hydrodeoxygenation step (a), followed by a hydroisomerization (b) step or hydrodewaxing step (c).

Yet in another embodiment, the catalytic hydroprocessing comprises a hydrodeoxygenation step (a), followed by a hydroisomerization (b) step and hydrodewaxing step (c).

Yet in another embodiment, the catalytic hydroprocessing comprises a hydrodeoxygenation step (a), followed by a hydroisomerization (b) step and hydrodearomatization step (d).

Yet in another embodiment, the catalytic hydroprocessing comprises a hydrodeoxygenation step (a), followed by a hydrodewaxing step (c) and hydrodearomatization step (d).

The hydroprocessing may also comprise a hydrocracking step (e) as the last step, resulting in the following configurations:
(a), (b) and (e);
(a), (c) and (e);
(a), (b), (c) and (e);
(a), (b), (d) and (e);
(a), (c), (d) and (e); and
(a), (b), (c), (d) and (e).

In one embodiment, the catalytic hydroprocessing comprises a hydrodeoxygenation step (a), followed by a hydroisomerization step (b), and/or hydrodewaxing step (c), and/or a hydrodearomatization step (d), and or hydrocracking step (e).

In another embodiment, the catalytic hydroprocessing comprises a hydrodeoxygenation step (a), followed by a hydroisomerization step (b), hydrodewaxing step (c) and a hydrocracking step (e).

Yet in another embodiment, the catalytic hydroprocessing comprises a hydrodeoxygenation step (a), followed by a hydroisomerization (b) step and hydrocracking step (e).

Yet in another embodiment, the catalytic hydroprocessing comprises a hydrodeoxygenation step (a), followed by a hydrodewaxing step (c) and hydrocracking step (e).

Yet in another embodiment, the catalytic hydroprocessing comprises a hydrodeoxygenation step (a), followed by a hydroisomerization (b) step, hydrodearomatization step (d) and hydrocracking step (e).

Yet in another embodiment, the catalytic hydroprocessing comprises a hydrodeoxygenation step (a), followed by a hydrodewaxing step (c), hydrodearomatization step (d) and hydrocracking step (e).

Yet in another embodiment, the catalytic hydroprocessing comprises a hydrodeoxygenation step (a), followed by a hydroisomerization (b) step, hydrodewaxing step (c), hydrodearomatization step (d) and hydrocracking step (e).

In an embodiment, the catalytic hydroprocessing comprises a hydrodeoxygenation step (a), where a hydrodeoxygenation product is obtained, followed by treating the hydrodeoxygenation product in a hydroisomerization step (b), and/or in a hydrodewaxing step (c), and/or in a hydrodearomatization step (d), and or in a hydrocracking step (e) to obtain hydroprocessed product.

As can be realized from the description above, both HDW and HDA catalysts are capable of inducing the same reactions, for example breaking aromatic ring structures. HDW catalysts are also capable of inducing isomerization reactions. Thus, it is possible to use a multifunctional HDA/HDW catalyst(s) after step (a) as the catalyst in the following step/steps, before the hydrocracking step (e). The hydroprocessing configuration in such a case is as follows: (a), (c)/(d) and (e), where in steps (c)/(d) a multifunctional HDW/HDA catalyst may be used.

It is also possible to use separate HDW and HDA catalysts, as a combination in a same catalyst bed, by either layering or mixing them. In such an embodiment, both HDW and HDA catalyst are used in a sulfided form.

In one embodiment, in the hydrodeoxygenation step, one or more HDO catalysts may be used.

In another embodiment, only HDW catalysts are used in the hydrodeoxygenation step.

In an embodiment, where hydroprocessing comprises a hydrodeoxygenation step followed by a hydroisomerization step, in the hydrodeoxygenation step at least one hydrodeoxygenation (HDO) catalyst and/or at least one hydrodewaxing (HDW) catalyst is used, and in the hydroisomerizing step at least one (HI) catalyst is used. Suitably the catalysts are arranged in such a way that the HDO/HDW catalyst is arranged upstream from the HI catalyst in the flow direction of the feedstock. The HI catalyst is suitably arranged in a separate reactor(s) downstream from the reactor(s) containing HDO /HDW catalyst. Suitably separation of a light gaseous side stream is carried out after the hydrodeoxygenation to remove sulfur compounds from the hydrodeoxygenated product before it is reacted with HI catalyst in the case that HI catalyst contains a sulfur sensitive Group VIII noble metal.

In another embodiment, the hydroprocessing comprises a hydrodeoxygenation step followed by a hydrodewaxing step and/or hydrodearomatising step. In the hydrodeoxygenation step at least one hydrodeoxygenation (HDO) catalyst and/or at least one hydrodewaxing (HDW) catalyst is used and in the hydrodewaxing step and/or hydrodearomatizing step at least one HDW and/or at least one HDA catalyst is used. In another embodiment the hydrodewaxing/hydrodearomatizing step is followed with a hydrocracking step.

The hydrocracking catalyst(s) in the hydrocracking step are preferably loaded in a separate reactor, which may comprise one or more catalyst beds of hydrocracking catalyst(s).

In an embodiment, in the hydrocracking step, hydrocracking of the product of the previous step(s) b) to d) or heavy compounds separated from the product from the previous step(s) b) to d) is carried out.

In an embodiment, the catalytic hydroprocessing step comprises a guard bed step, arranged upstream of the first hydroprocessing bed or reactor.

The hydroprocessing reactions are highly exothermic, whereby the temperature can rise to a level which is detrimental to the stability of the catalyst and/or product quality.

Recirculation of the hydrocarbon fractions or products and/or purified effluent gas to the reactor(s) may be used to control the temperatures.

Additionally, the hydrocarbon product and/or purified gases may be directed for quench purposes between one or more catalyst beds.

At least one effluent from the hydroprocessing is drawn off from the last reactor. In one embodiment, the effluent is directed to a separator, such as any suitable separator or flashing unit. In the separator, typically water, gaseous stream comprising hydrogen, C1 - C5 hydrocarbons, H₂S, CO and CO₂ are separated from the liquid component typically comprising some C1 - C5 hydrocarbons, C5 and higher mainly paraffinic hydrocarbons, typically up to C26, cyclic hydrocarbons, and aromatic compounds. Water and gases may also be separated by other means which are well known to those skilled in the art.

The obtained liquid component is suitably fractionated in a fractionating step. The fractionation step may provide at least a gaseous fraction or stream, a light hydrocarbons fraction or stream (C4 - C20) and a heavy hydrocarbon fraction or stream comprising hydrocarbons having carbon number of at least C20.

### Catalytic cracking step

In an embodiment, the hydroprocessed biological feedstock obtained from the hydroprocessing step, particularly the fraction or stream comprising hydrocarbons having carbon number of at least C20 and at least one non-renewable feedstock are mixed or combined to obtain a mixture, which is directed to catalytic cracking step to obtain a product comprising hydrocarbons boiling in the range of 40 - 210°C (gasoline range).

In an embodiment, the hydroprocessed feedstock is fractionated to provide at least a heavy hydrocarbon fraction comprising hydrocarbons having carbon number of at least C20, and said heavy hydrocarbon fraction and at least one non-renewable feedstock are mixed and subjected to catalytic cracking.

The hydroprocessed feedstock may comprise at least one effluent obtained from the hydroprocessing, a liquid hydrocarbon fraction separated from said effluent or a heavy hydrocarbon fraction.

In an embodiment the hydroprocessed feedstock is a heavy hydrocarbon fraction comprising hydrocarbons having carbon number of at least C20.

The hydroprocessed feedstock (preferably the heavy hydrocarbon fraction or stream comprising hydrocarbons having carbon number of at least C20) is used as co-feed in the catalytic cracking with non-renewable feedstock, such as mineral oil based, shale oil based or coal oil-based feedstock, suitably vacuum gas oil or atmospheric gas oil.

The amount of the hydroprocessed biological feedstock, in the feed to the catalytic cracking, may vary from 0.1 to 95 % by volume, preferably from 5 to 80 % by volume more preferably from 10 to 50 % by volume, and respectively the amount of the non-renewable feedstock may vary from 5 to 99.9 % by volume, preferably from 20 to 95 % by volume more preferably from 50 to 90 % by volume.

The catalytic cracking may be fluid catalytic cracking or hydrocracking. In a preferable embodiment the catalytic cracking is fluid catalytic cracking.

In the fluid catalytic cracking (FCC) step, the hydroprocessed feedstock and non-renewable feedstock are heated to a high temperature and moderate pressure, and brought into contact with a hot, powdered catalyst. The catalyst breaks the long-chain molecules of the high-boiling hydrocarbon liquids into much shorter molecules, which are collected as a vapor. Catalytic cracking is accomplished by contacting hydrocarbons in a reaction zone with a catalyst composed of finely divided particulate material. The reaction in fluid catalytic cracking, as opposed to hydrocracking, is carried out in the absence of added is hydrogen or the consumption of hydrogen. As the cracking reaction proceeds, substantial amounts of coke are deposited on the catalyst. The catalyst is regenerated at high temperatures by burning coke from the catalyst in a regeneration zone. Coke-containing catalyst, referred to herein as "coked catalyst", is continually transported from the reaction zone to the regeneration zone to be regenerated and replaced by essentially coke-free regenerated catalyst from the regeneration zone. Fluidization of the catalyst particles by various gaseous streams allows the transport of catalyst between the reaction zone and regeneration zone. Methods for cracking hydrocarbons in a fluidized stream of catalyst, transporting catalyst between reaction and regeneration zones, and combusting coke in the regenerator are well known by those skilled in the art of FCC processes. The modern FCC units are all continuous processes which operate 24 hours a day for as long as 3 to 5 years between scheduled shutdowns for routine maintenance. There are several different proprietary designs that have been developed for modern FCC units. There are two different configurations for an FCC unit: the "stacked" type where the reactor and the catalyst regenerator are contained in a single vessel with the reactor above the catalyst regenerator and the "side-by-side" type where the reactor and catalyst regenerator are in two separate vessels.

Depending on the desired products, various catalyst compositions having different levels of activity, residence times, temperatures, pressures and catalyst/feed ratios may be used.

The catalyst may comprise at least one component selected from amorphic clays, crystalline molecular sieves, rhenium, platinum, palladium, ruthenium, osmium, iridium and rhodium.

The ratio of the catalyst/combined feedstock is 2 - 50, suitably 3 - 35.

The reactor temperature is 450 - 700°C, suitably 470 - 680°C.

The reactor pressure is 50-300 KPa, suitably 160-260 KPa.

The reactor residence time is 0.1 - 30 s, suitably 0.1-25 s.

The feed temperature is 90 - 400°C, suitably 110 - 400°C.

The regenerator temperature is 650 - 770°C.

In an embodiment the catalytic cracking may be carried out as hydrocracking, where hydrocracking (HC) catalysts may be used. HC catalysts decrease the hydrocarbon chain length and convert high boiling point, high molecular weight hydrocarbons into lower boiling range, lower molecular weight compounds. HC catalysts are active in cracking of carbon-carbon bonds as well as hydrogenation of unsaturated molecules in the feedstock.

The HC catalysts are selected from catalysts containing one or more metals of the Groups 8, 9 or 10 and/or Group 6 metals, on a suitable support. Acidic supports, such as zeolites, may be used either alone or mixed with a carrier matrix. Suitable catalysts are Pd or Pt containing catalysts or sulfided catalysts comprising Mo or W in combination with Ni or Co. Suitable catalysts include NiMo supported on gamma alumina or on ZSM-5, Pt supported on Y zeolite or on ZSM-5 or NiW on zeolite-alumina. The HC catalyst may also comprise a suitable binder, for example inorganic oxide material, such as alumina. In an embodiment, NiW on zeolite-alumina is used as HC catalyst.

The temperature of the hydrocracking step is 200 - 480°C, preferably 250 - 450°C, particularly preferably 280 - 450°C.

The pressure of the hydrocracking step is 20 - 160 bar, preferably 40 - 100 bar, particularly preferably 45 - 95 bar.

The WHSV varies between 0.1 and 15, preferably between 0.3 and 5. The product obtained from the catalytic cracking step is suitably directed to a separator to obtain gaseous fraction and a liquid fraction. The liquid fraction, drawn off from the outlet from the separator, such as cold separator is subjected to fractionation to obtain at least a hydrocarbon fraction comprising hydrocarbons boiling in the range of 40 - 210°C (gasoline fraction). Additionally, a heavy gas oil fraction, a light gas oil fraction, a gas fraction, a cycle oil fraction and an olefin fraction may be obtained.

The person skilled in the art is able to vary the catalytic cracking conditions to obtain desired product distribution.

The hydrocarbon fraction distilling at temperatures ranging from 40°C to 210°C is useful as high-quality gasoline fuel. Additionally, fractions suitable as industrial chemicals etc may be obtained.

The process provides several advantageous effects. The benefits of this process are that feedstocks of biological origin, containing significant amounts of fatty acids and/or esters of fatty acids, also those where the carbon number in the fatty acid is high, typically C20 or higher, can be processed as co-feed with non-renewable feedstocks, such as mineral oil - based feedstocks, for example in existing oil refineries. The process removes effectively components and impurities detrimental to the catalysts, and oxygen, which causes corrosion, while maintaining in the feedstock the components valuable as feed in the catalytic cracking. No modifications are required in the FCC plant in the gas handling systems. A benefit of subjecting the hydroprocessed feedstock to catalytic cracking, particularly to FCC is that the octane number of the gasoline produced by the present process is high, typically about 82, because not only n-paraffins having octane number of about from 40 to 50 are produced.

Release of phosphorus in the atmosphere by burning or dumping in the environment can be avoided and low value impure feeds can be converted to useful products. The feedstock is completely free of phosphorous already before the hydroprocessing step.

### Examples

The present invention has been described herein with reference to specific embodiments. It is, however clear to those skilled in the art that the process(es) may be varied within the bounds of the claims.

### Example 1

### Acid degumming of carinata oil

Acid degumming of *Brassica carinata* oil is carried out by treating 100 g of the oil with 1 wt-% phosphoric acid (85 wt-%) at 80°C temperature for 30 min, whereby gums are separated/precipitated and then removed by centrifuging. The phosphorus value of the degummed oil is lower than 15 ppm.

### Example 2

### Hydrolysis of degummed carinata oil

The degummed oil obtained in example 1 is directed to hydrolysis, where the degummed oil is treated with 50 wt% of water under a pressure of 42 bars and a temperature of 250°C in a tubular reactor, for 1.5 hours, to obtain an aqueous stream comprising glycerol and a stream comprising fatty acids (=pretreated feedstock).

### Example 3

### Hydroprocessing pretreated feedstock

The pretreated feedstock obtained in example 2 is directed to one-step hydroprocessing, where the pretreated feedstock is hydroprocessed at 350 - 400°C temperature, under 90 bar pressure, in the presence of a catalyst comprising NiW and NiMo, with hydrogen to obtain an effluent consisting of liquid phase and gas phase. Gas phase and water are separated and a phase comprising liquid hydrocarbons is obtained. Heavy hydrocarbons having carbon number of at least C20 (those boiling in the range from and above 320°C) are separated by distillation (=hydroprocessed feedstock) and this hydroprocessed feedstock is directed to fluid catalytic cracking.

### Example 4

### Fluid catalytic cracking of hydroprocessed feedstock

Vacuum gas oil (90 vol-%) originating from crude oil is combined with the hydroprocessed feedstock (10 vol-%) obtained in example 3 to obtain a mixture, which is heated to a temperature of 370°C and directed to fluid catalytic cracking reactor. Fluid catalytic cracking is carried out at the temperature of 540°C, under about 1 atm pressure, in the presence of a USY-type zeolite catalyst, to obtain a product, which is directed to fractional distillation, where gas fraction, gasoline fraction, heavy gas oil fraction and light gas oil fraction are separated.

## Claims

1. A process for producing hydrocarbons, where said process comprises the steps,
feedstock of biological origin is degummed to produce degummed feedstock;
the degummed feedstock is subjected to bleaching and/or hydrolysis to produce pretreated feedstock;
the pretreated feedstock is hydroprocessed catalytically to produce hydroprocessed feedstock;
the hydroprocessed feedstock is fractionated to produce at least one fraction comprising hydrocarbons having carbon number of at least C20; and
the fraction comprising hydrocarbons having carbon number of at least C20 and
at least one non-renewable feedstock is subjected to catalytic cracking to produce a product comprising hydrocarbons boiling in the range of 40 - 210°C,
wherein the feedstock of biological origin comprises at least one oil derived from biological sources, comprising at least 85 wt% of C18-C26 fatty acids, wherein the C18-C26 fatty acids comprise at least 30 wt% of C20-C26 fatty acids.

2. The process according to claim 1, wherein the fraction comprising hydrocarbons having carbon number of at least C20 is combined with the non-renewable feedstock.

3. The process according to claim 1 or 2, wherein the feedstock of biological origin comprises at least one oil derived from biological sources, comprising at least 85 - 99 w % of C18-C26 fatty acids.

4. The process according to claim 3, wherein the C18-C26 fatty acids comprise 30 - 60 wt% of C20-C26 fatty acids.

5. The process according to any one of claims 1 - 4, wherein the feedstock of biological origin comprises at least one plant oil originating from *Brassica* species, preferably the feedstock of biological origin comprises at least one plant oil originating from *Brassica carinata.*

6. The process according to any one of claims 1 - 5, wherein the feedstock of biological origin is selected from mixtures of plant oil(s), and the mixture comprises at least one plant oil originating from *Brassica* species, preferably mixture comprises 10% - 100% of oil originating from *Brassica carinata.*

7. The process according to any one of claims 1 - 6, wherein a mixture of the pretreated feedstock and crude tall oil is hydroprocessed catalytically, preferably the crude tall oil is pretreated crude tall oil.

8. The process according to any one of claims 1-7, wherein method used in the degumming is selected from water degumming, acid degumming, dry degumming, enzymatic degumming, EDTA degumming, deep degumming, membrane degumming and combinations thereof, preferably acid degumming is used.

9. The process according to any one of claims 1 - 8, wherein the bleaching is carried out as contact bleaching, batch atmospheric bleaching, batch vacuum bleaching or continuous vacuum bleaching.

10. The process according to any one of claims 1 - 8, wherein the bleaching is carried out in the presence of at least one bleaching agent selected from adsorptive clays, synthetic amorphous silicas and activated carbons.

11. The process according to any one of claims 1 - 10, wherein the bleaching comprises deacidification.

12. The process according to any one of claims 1 - 11, wherein the hydrolysis is carried out as the Twitchell process, medium pressure catalytic autoclave splitting, catalytic or non-catalytic low pressure splitting with superheated steam, continuous high-pressure countercurrent splitting or enzymatic fat splitting, preferably as continuous high-pressure countercurrent splitting.

13. The process according to any one of claims 1-12, wherein the catalytic hydroprocessing is carried out with a catalyst effecting one or more of removing oxygen and other heteroatoms, effecting isomerisation, effecting dearomatization, effecting cracking, effecting hydroisomerization, effecting hydrocracking, or a combination of said catalysts.

14. The process according to any one of claims 1-13, wherein the catalytic hydroprocessing comprises at least a hydrodeoxygenation step.

15. The process according to any one of claims 1-14, wherein the catalytic hydroprocessing comprises a hydrodeoxygenation step followed by one or more steps selected from isomerization, hydrodewaxing, hydrodearomatization and hydrocracking steps.

16. The process according to any one of claims 1-15, wherein the fraction comprising hydrocarbons having carbon number of at least C20and at least one non-renewable feedstock is subjected to catalytic cracking in an oil refinery.

17. The process according to any one of claims 1 - 16, wherein the catalytic cracking is fluid catalytic cracking or hydrocracking, preferably the catalytic cracking is fluid catalytic cracking.

18. The process according to claim 15, wherein the catalytic cracking is fluid catalytic cracking and ratio of the cracking catalyst to combined feedstock ratio is 2-50, preferably 3-35.

19. The process according to any one of claims 1 - 18, wherein the product is fractionated to fraction comprising hydrocarbons boiling in the range of 40 - 210°C, a heavy gas oil fraction, a light gas oil fraction, a cycle oil fraction and an olefin fraction.
